# EUROPEAN PATENT APPLICATION

(11) **EP 2 400 042 A1**
(43) Date of publication of application: **28.12.2011**
(21) Application number: 11164894.5
(22) Date of filing: 05.05.2011
(51) Int. Cl.: C23C 22/00, C23F 1/00, B29C 45/14

(54) **Metal-and-resin composite and method for making same**

(30) Priority: 23.06.2010 CN 201010207576
(71) Applicant: Shenzhen Futaihong Precision Industry Co., Ltd., Shenzhen City, Guangdong Province 518109 (CN); FIH (Hong Kong) Limited, Cheung Sha Wan Kowloon, Hong Kong (CN)
(72) Inventor: Su, Jong-Yi, Shenzhen City, Guang Dong Province China PSC 518109 (CN); Liu, Bin, 518109, ShenZhen City Shaanxi (CN); Wang, Ren-Ning, 518109, ShenZhen City Shaanxi (CN)
(74) Representative: Wilson, Peter

(57) **Abstract**

A metal-and-resin composite (100) includes a metal substrate and resin composition formed on the metal substrate (11). The metal substrate (11) has a surface with nano-pores having an average diameter of about 30-55 nm. The resin composition (13) is integrally bonded to the surface of the metal substrate (11) having the nano-pores and filling the nano-pores. The resin composition contains crystalline thermoplastic synthetic resins.

## Description

### 1. Field of the Disclosure

The present disclosure relates to metal-and-resin composites, particularly to a metal-and-resin composite having high bonding strength and a method for making the composite.

### 2. Description of related art

Adhesives, for combining heterogeneous materials in the form of a metal and a synthetic resin are demanded in a wide variety of technical fields and industries, such as the automotive and household appliance fields. However, adhesives are generally only effective in a narrow temperature range of about -50°C to about 100°C, which means that they are not suitable for applications where operating or environmental temperatures may fall outside the range.

Therefore, other bonding methods have been applied that do not involve the use of an adhesive. One example of such methods is by forming bonds through injection molding or other similar process. However, the bonding strength of the metal and resin can be improved.

Therefore, there is room for improvement within the art.

### BRIEF DESCRIPTION OF THE DRAWINGS

Many aspects of the metal-and-resin composite can be better understood with reference to the following figures. The components in the figures are not necessarily drawn to scale, the emphasis instead being placed upon clearly illustrating the principles of the metal-and-resin composite. Moreover, in the drawings like reference numerals designate corresponding parts throughout the several views.

Fig. 1 is a cross-section view of an exemplary embodiment of a composite of chemically cleaned metal and resin.

Fig. 2 is a scanning electron microscopy view of an exemplary embodiment of the chemically cleaned metal substrate.

Fig. 3 is a cross-section view of molding the metal-and-resin composite shown in Fig. 1.

### DETAILED DESCRIPTION OF THE DISCLOSURE

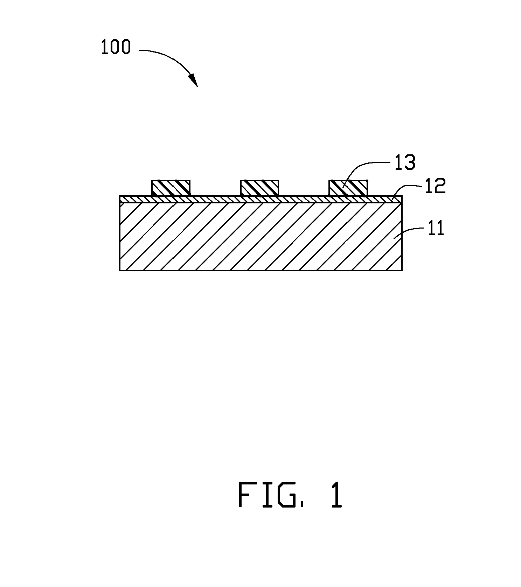

Fig. 1 shows a metal-and-resin composite 100 according to an exemplary embodiment. The composite 100 includes a metal substrate 11, an antioxidant film 12 formed on a surface of the substrate 11, and resin compositions 13 formed on the antioxidant film 12.

The metal substrate 11 may be made of aluminum alloy, magnesium alloy, stainless steel, copper, or copper alloy.

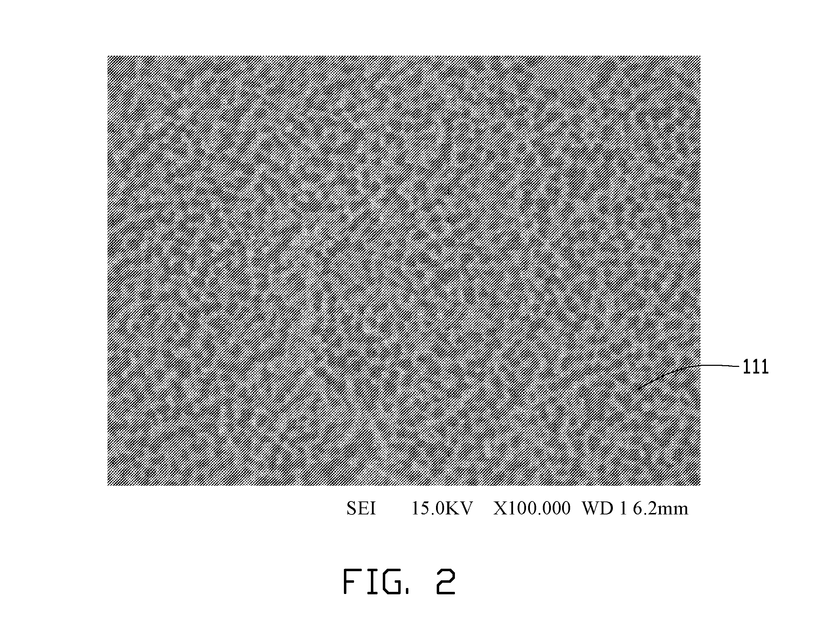

Fig. 2 shows a scanning electron microscopy view of the substrate 11. The substrate 11 defines nano-pores 111. These nano-pores 111 have an average diameter of 30-55 nm. The nano-pores 111 may be evenly distributed in the metal substrate 11. The nano-pores 111 may be formed by chemically cleaning the metal substrate 11.

The antioxidant film 12 may be an organic film. The antioxidant film 12 is used for protecting the metal substrate 11 from oxidation. Oxidation may affect bonding force between the resin compositions 13 and the substrate 11.

The resin compositions **13** may be coupled to the substrate 11 and the antioxidant film 12 by molding. During the molding process, molten resin coats surface of the antioxidant film 12 and fills the nano-pores 111, thus strongly bonding the resin compositions **13** to the antioxidant film 12 and the substrate 11. Compared to the conventional injection molding wherein the metal substrate is not chemically cleaned to form the nano-pores, the composite 100 in this exemplary embodiment has a much stronger bond between the resin compositions 13 and the substrate 11 (about quintuple the bonding force). The resin compositions 13 may be made up of crystalline thermoplastic synthetic resins having high fluidity. In this exemplary embodiment, composite of polyphenylene sulfide (PPS) and fiberglass (GF), polyamide (PA), polyethylene terephthalate (PET), and polybutylene terephthalate (PBT) can be selected as the molding material for the resin compositions 13, and all of the resin compositions 13 can bond firmly with the antioxidant film 12 and the substrate 11. The fiberglass may have a mass percentage of about 20-50% of the composite of PPS and GF.

A method for making the composite 100 may include the following steps:

The metal substrate 11 is provided. The metal substrate 11 may be made of aluminum alloy, magnesium alloy, stainless steel, copper, or copper alloy.

The metal substrate 11 is chemically cleaned. The chemically cleaning process may include the steps of dewaxing the metal substrate 11, degreasing the metal substrate 11, and removing any oxidation residue that has formed.

Dewaxing the metal substrate 11 may be carried out by dipping the substrate 11 in a dewaxing solution for no less than 5 minutes. The dewaxing solution may be a conventional dewaxing solution. The dewaxing solution in this embodiment may have a concentration of about 30-80 ml/L. The temperature of the dewaxing solution may be about 55°C-65°C. Once dewaxed, the substrate 11 is removed from the dewaxing solution and rinsed in water.

Degreasing the substrate 11 may be carried out by dipping the substrate 11 in a degreasing solution for about 1-6 minutes. The degreasing solution may be a conventional degreasing solution. The degreasing solution in this embodiment may have a concentration of about 90-150 g/L. The temperature of the degreasing solution may be about 20°C-30°C. Then, the substrate 11 is removed from the degreasing solution and rinsed in water.

The substrate 11 may oxidize during manufacture. Therefore, a step of removing any residue of oxidation is necessary. The removing process in this embodiment may be carried out by dipping the substrate 11 in an acid eliminating solution for about 1-10 minutes. The acid eliminating solution may be a conventional acid eliminating solution. The acid eliminating solution in this embodiment may have a concentration of about 30-80 ml/L. The temperature of the acid eliminating solution may be about 20°C-30°C. Next, the substrate 11 is removed from the acid eliminating solution and rinsed in water.

Referring to Fig. 2, after chemical cleaning, the surface of the substrate 11 defines the nano-pores 111 having an average diameter of about 30nm-55 nm.

Next the substrate 11 is anti-oxidizing treated to form the anti-oxidation film 12. The treatment may include the step of dipping the substrate 11 in an anti-oxidizing solution for about 1-5 minutes. The anti-oxidizing solution may be a conventional anti-oxidizing solution. The temperature of the anti-oxidizing solution may be about 20°C-30°C. After the anti-oxidizing process, the substrate 11 formed with the anti-oxidation film 12 is rinsed in water and then dried.

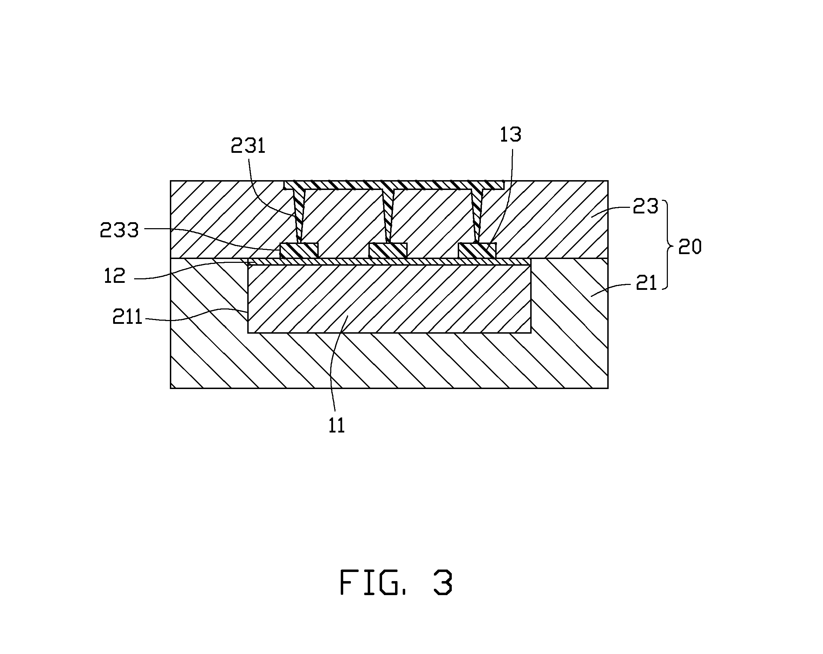

Referring to Fig. 3, an injection mold 20 is provided. The injection mold 20 includes a core insert 23 and a cavity insert 21. The core insert 23 defines several gates 231, and several first cavities 233. The cavity insert 21 defines a second cavity 211 for receiving the substrate 11. The substrate 11 coated with the film 12 is positioned in the second cavity 211, and molten resin is injected through the gates 231 to coat the surface of the film 12 and fill the nano-pores 111, and finally fill the first cavities 233 to form the resin compositions 13, thereby forming the composite 100. The molten resin may be crystalline thermoplastic synthetic resins having high fluidity, such as PPS+GF, PA, PET, or PBT. During the molding process, the substrate 11 may be heated to about 100°C-350°C. Electromagnetic induction may be used to heat the substrate 11. Furthermore, once the molten resin has been injected, the injection mold 20 is instantaneously cooled.

Tensile strength and shear strength of the composite 100 have been tested. The tests indicate that the tensile strength of the composite 100 is greater than 10 MPa, and the shear strength of the composite 100 is greater than 25 MPa. Furthermore, the composite 100 has been subjected to a temperature humidity bias test (72 hours, 85°C, relative humidity: 85%) and a thermal shock test (48 hours, -40°C-85°C, 4 hours/cycle, 12 cycles total), such tests did not result in decreased tensile strength and shear strength of the composite 100.

It is believed that the exemplary embodiment and its advantages will be understood from the foregoing description, and it will be apparent that various changes may be made thereto without departing from the spirit and scope of the disclosure or sacrificing all of its advantages, the examples hereinbefore described merely being preferred or exemplary embodiment of the disclosure.

## Claims

1. A metal-and-resin composite , comprising:
a metal substrate having a surface with nano-pores having an average diameter of about 30-55 nm; and
a resin composition integrally bonded to the surface of the metal substrate having the nano-pores and filling the nano-pores, the resin composition containing crystalline thermoplastic synthetic resins.

2. The composite as claimed in claim 1, wherein the nano-pores are formed by subjecting the metal substrate to be chemically cleaned.

3. The composite as claimed in claim 1 or claim 2, wherein the composite further comprises an organic anti-oxidation film formed on the surface of the metal substrate having the nano-pores, the resin composition bonds with the anti-oxidation film.

4. The composite as claimed in claim 3, wherein the resin composition is formed by molding crystalline thermoplastic synthetic resin on the anti-oxidation film and the metal substrate.

5. The composite as claimed in any preceding claim, wherein the crystalline thermoplastic synthetic resin is a composite of polyphenylene sulfide and fiberglass, polyamide, polyethylene terephthalate, or polybutylene terephthalate.

6. The composite as claimed in claim 5, wherein the crystalline thermoplastic synthetic resin is a composite of polyphenylene sulfide and fiberglass, the fiberglass has a mass percentage of about 20-50%.

7. The composite as claimed in any preceding claim, wherein the metal substrate is made of aluminum alloy, magnesium alloy, stainless steel, copper, or copper alloy.

8. A method for making a metal-and-resin composite , comprising:
providing a metal substrate;
chemically cleaning a surface of the metal substrate to form nano-pores having an average diameter of about 30-55 nm;
positioning the metal substrate in a mold and heating the metal substrate to about 100 °C-350°C;
molding crystalline thermoplastic synthetic resin on the chemically cleaned surface of the metal substrate and filling the nano-pores; and
instantaneously cooling the mold to form the composite.

9. The method as claimed in claim 8, wherein the chemically cleaning process comprises dewaxing the metal substrate, degreasing the metal substrate, and removing oxidation residue.

10. The method as claimed in claim 9, wherein dewaxing the metal substrate is carried out by dipping the metal substrate in a dewaxing solution for about no less than 5 minutes, the dewaxing solution has a concentration of about 30-80 ml/L and a temperature of about 55°C-65°C.

11. The method as claimed in claim 9 or claim 10, wherein degreasing the metal substrate is carried out by dipping the metal substrate in a degreasing solution for about 1-6 minutes, the degreasing solution has a concentration of about 90-150 g/L and a temperature of about 20°C-30°C.

12. The method as claimed in one of claims 9 to 11, wherein the removing oxidation residue process is carried out by dipping the metal substrate in an acid eliminating solution for about 1-10 minutes, the acid eliminating solution has a concentration of about 30-80 ml/L and a temperature of about 20°C-30°C.

13. The method as claimed in one of claims 8 to 12, wherein the method further includes an anti-oxidizing treatment after the metal substrate being chemically cleaned.

14. The method as claimed in claim 13, wherein the anti-oxidizing treatment is carried out by dipping the metal substrate in an anti-oxidizing solution having a temperature of about 20°C-30°C for about 1 -5 minutes.

15. The method as claimed in one of claims 8 to 14, wherein electromagnetic induction is used to heat the metal substrate before the step of molding crystalline thermoplastic synthetic resin.
